Europäisches Patentamt

European Patent Office

Office européen des brevets

(11) Publication number: **0 426 985 A2**

# EUROPEAN PATENT APPLICATION

(21) Application number: 90118582.7

(22) Date of filing: 27.09.90

(51) Int. Cl.5: **F16K 1/22, A01G 25/09**

(30) Priority: **09.10.89 IT 4578089**

(43) Date of publication of application:
**15.05.91 Bulletin 91/20**

(84) Designated Contracting States:
**AT BE CH DE DK ES FR GB GR IT LI LU NL SE**

(71) Applicant: **MATERMACC s.r.l.**
**Viale Ponte Rosso, 35**
**I-33078 San Vito al Tagliamento (PN)(IT)**

(72) Inventor: **Sut, Livio**
**Via Montello 14/A**
**I-33078 San Vito al Tagliamento (PN)(IT)**

(54) **Butterfly valve for the control of the irrigation reels.**

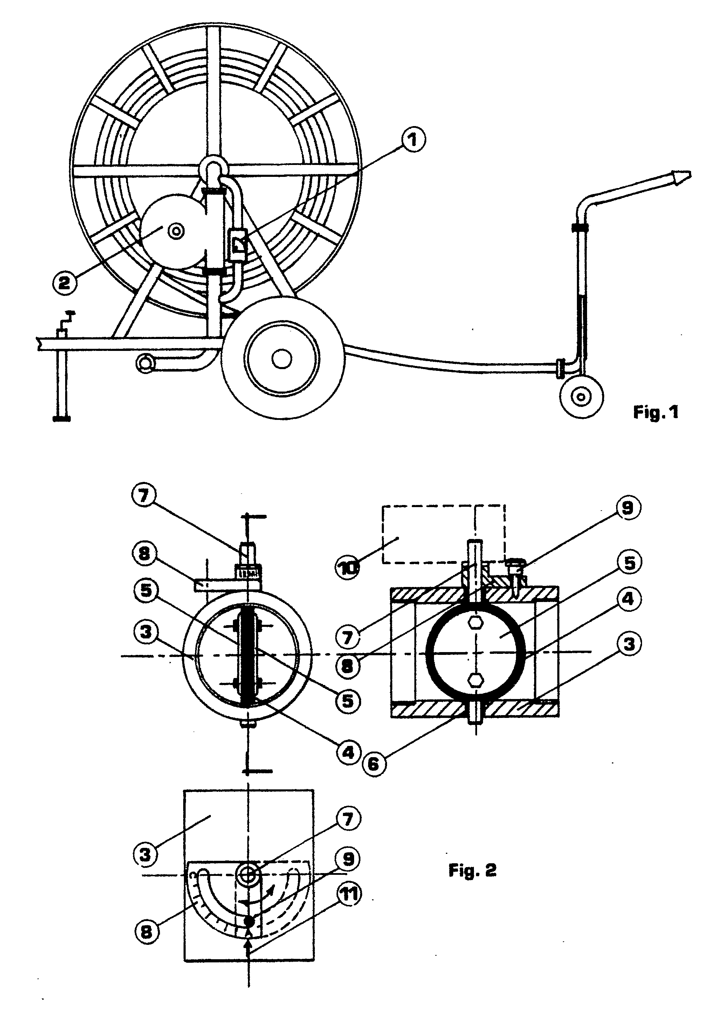

(57) Butterfly valve (1) (figure 2) for the control of irrigation reels (figure 1) able to adjust directly or indirectly the flow of the liquid through the turbine (2) or the lung system or the jack which bring the hose rewinding operation. If is made up of a body (3) and a butterfly (4) which can be adjusted manually or automatically.

The butterfly (4) made of elastic material, is caused to rotate by a shaft (7) by means of two rigid disc (5) having a diameter smaller than the butterfly diameter. The elastic part permits to get a good locking and an easy adjustment with little effort even if there are impurities in the irrigation liquid.

Fig. 2

# BUTTERFLY VALVE FOR THE CONTROL OF THE IRRIGATION REELS

The subject of this invention is a butterfly valve for the control of the hose rewinding speed in the irrigation reels for agriculture.

The rewinding operation of these irrigation reels can be accomplisched by an gas engine, by an electric motor or making use of the energy coming from the irrigation liquid.

Those irrigators having the hose rewinging accomplished by using the energy from the irrigation liquid, can be operated by a turbine, a lung, a single or double-acting hydraulic piston or any other htdraulic motor, in these cases the hose rewinding speed adjustment can be controlled either mechanically, for example operating on a speed variator, or adjusting the folw of the liquid passing through a valve.

## GENERAL SITUATION IN ENGINEERING

In engineering we know valves for the control of the hase rewinding speed fitted to the irrigation reels operated by the energy coming from the irrigation liquid.

Such valves directly or indirectly control this flow which brings about the hose rewinding operation and they can be ball valves, sluice valves and the like; sometimes they can be mere taps.

The adjustment of these valves is generally manual, sometimes we must use mechanically adjusted valves called compensanting valves: they keep the speed constant while the rewinding diameter is changing.

Irrigators are also provided with systems of control and adjustment consisting of electronic consoles operating electric motors or solenoid valves; these ones perform an automatic adjusement of the valves for the speed control. The controlling valves used so fas have not always proved suitable for being operated manually or, above all, automatically because they often need a remarkable effort to start wording and so tht must be operated by electric motor or ratiomotors which absorb considerable quantities of energy and this limit the authonomy of authomatic adjusting systems usually fed by a battery.

In addition to this, the flow controlling elements which make up a valve (i.e. balls, valve body, sluices, etc.) are generally rigid or nearly rigid, therefore the impurities in the irrigation liquid (such as sand, stones, etc.) cause the jam of the valve adjustment together with the impossibility of procceding automatically to the proper adjustment; we may also have damages to the authomatic control systems.

In well-known engineering is therefore difficult to get the adjustment of the speed of these irrigators with little cousunption of energy, with not very expensive systems and so that we can have a proper adjustment even through there are impurities in the irrigation liquid.

## DESCRIPTION OF THE INVENTION

The object of this invenction is to overcome the disadvantages related to well-known engineering, providing a butterfly valve for the control of the hose rewinding speed in irrigation reels so that manual or automatic adjustments become possible and with little consumption of energy, we can have a proper adjustment of the flow, without jamming, even through there are impureties in the irrigation liquid.

According to this invention the butterfly valve consists of an elastic material disc, with a proper diameter, and generally the same as or slightly smaller than the diameter inside the valve body.

The elastic butterfly, mounted inside the valve body, is diametrally crossed by a shaft and it is made integral by means of two rigid discs. These discs, mounted are on each side of the butterfly itself, are fixed to the schaft concentrically with respect to the butterfly by measn of screws, rivets or another system. By turning the the rigid discs cause the elastic butterfly inside the valve body to rotate. Outside the butterflly body, the shaft is integral to a lever or a part for the manual adjustment, or can be connected with a motor.

The rotation of 90 degrees of the valve shaft permits to change the butterfly parallel to the flow, to a complete closing, with the butterfly perpendicular to the flow and transversal to the valve body, with the possibility of having countless intermediale adjustments.

To our advantage the lever or the part for the adjustment can be graduated to indicate the position of the butterfly and thus the adjustment.

If the adjustment is accomplisched manually, we can lock the position by measn of a holdfast, a screw knob or another system. The butterfly can also be made of elastic material outside, and have a rigid core for the fixing to the shaft, or be made directly on the shaft, in the second case the valve body must be made in two parts to let the butterfly be inserted.

The elastic material used to make the butterfly can be rubber, plastic material or another one and can be abtained by molding or another system; the dimensions of the elastic butterfly, of the fixing systems of the butterfly to the shaft and of the other details, can be determined experimentally or with theorectical calculations.

The butterfly body can be a specifically designed element or made out of parts accomplishing other functions, for example it can be obtained directly from the casting making up the turbine casing. To our advantage some bearings can be mounted between the shaft and the valve body in order to reduce friction and wear; there can be also some o rings to avoid the flowing out of liquid between the shaft and the valve body.

Therefore this invention relates to a butterfly valve for the control of the irrigation reels able to adjust directly or indirecly the flow of the liquid through the turbine, the lung system or the jack which bring about the hose rewindig operation. It is characterised by the fact that the butterfly valve needs little effort for its adjustment and can thus be adjusted also automatically; outside the butterfly there is an elastic part able to adjust the flow adequately and not to hinder the adjustment operation even though then are impurities in the irrigation liquid.

## DESCRIPTION OF THE DRAWINGS

The following specification relates to a possible contruction of this invention. It must be interpreted as illustrative and not in a limiting sense and it must be read in conjunction with the enclosed plate, in which:

Figure 1 shows an irrigation reel with turbine (2) for the hose rewinding operation and a butterfly valve (1) for the control of the rewinding speed fixed in the turbine by-pass.

Figure 2 shows a frontal view, a side view and a section of a butterfly valve having the butterfly with an elastic part (4) according to this invenction. Those figures showing the same details or the same functions have the same reference number.

## CONSTRUCTION

Referring to Figure 1, the butterfly valve (1) is fitted to the irrigation reel. The dimensions of the butterfly valve (1) will be calculated according to the requirements for the control if the irrigator on which it is mounted. Referring to Figure 2, the butterfly valve is composed of a cylindrical hollow body, with threaded ends. but its body could be also flanged or made in two parts directly out of the casting of the turbine casing, in the cylindrical body (3) the butterfly shaft (7) is inserted transversally.

The butterfly (4) made of elastic material such as rubber, plastic material, etc., can be obtained by moulding or another system. The butterfly (4) diameter is the same as or slightly smaller than the diameter inside the valve body (3). The diameter, the thiskness, the form and the material of the elastic butterfly (4) must have properly calculated dimensions accrding to the pressure of the irrigation liquid, to the seal necessary for the valve and to the type of fixing of the elastic butterfly (4) to the shaft. The butterfly (4), mounted inside the valve body (3) , is diametrally crossed by the shaft (7), it becames integral to this by means of two rigid discs, made of metal or another material, with a diameter smaller than the butterfly (4) diameter, the rigid discs, mounted are on each side of the butterfly (4), are fixed to the shaft (7) concentrically with respect to the elastic butterfly (4) by means of screws, rivets, or another system.

According to variations, the elstic butterfly (4) can be made of elastic material outside and have a rigid core for the fixing to the shaft (7), or be made directly on the shaft (7); in this letter case the valve body must be made in two parts to let the butterfly (4) be inserted.

To our advantage some bearings (6), made of teflon, bronxe or another material, can be mounted between the shaft (7) and the valve body (3) in order to reduce friction and wear; there can be also some o rings to avvoid the flowing out of liquids between the shaft (7) and the valve body (3).

Outside the butterfly body (3), the shaft (7) is integral with a lever or a part for the manual adjstment (8). The shaft (7) can also be connected with a motor or with another system for the automatic adjustment of the valve.

The rotation of 90 degrees of the valve shaft (7) permits to change the valve adjustment from a complete opening (figure 2), with the butterfly parallel to the flow, to a complete closing, with the butterfly perpendicular to the flow and transversal to the valve body (), with countless possibilities of intermediate adjustments.

To our advantage the lever or the part for the adjustment can be graduated to indicate the position of the butterfly.

If the adjustment is accomplished manually we can lock the position by means of a holdfast a screw knob (9) or another system.

All parts forming the valve, except for the elstic butterfly (4), can be made of metal, plastic material, or another one, provided taht it is suitable for our speicifc use and has properly calculated dimensions.

These and other variantions are all possible for a technician of this branch, without departing from the area of this invention.

## Claims

1) Butterfly (1) valve for the control of irrigation reels able to adjust directly or indirectly the flow of the liquid through the turbine (2), the lung system or the jack which bring the hose rewinding operation. This valve is characterized by the fact that it is made up of a body (3) and a butterfly (4) made of elastic material, manually or automatically adjustable, with a pin (7) causing it to rotate by means of two rigid discs (5) having a diameter smaller than the diameter of the butterfly. In this way the external elastic part permits to get a good locking and an easy adjustment with little effort, without jamming, even though there are impurities in the irrigation liquid.

2) Butterfly (1) valve for the control of irrigation reels as said in claims 1 and 2 characterized by the fact that the butterfly (4) is made of elestic material and is integral to the shaft (7). It gets a rotating movement by means of a rigid core.

3) Butterfly (1) valve as said in clsims 1 and 2 characterized by the fact that the butterfly (4), made of elastic material, is made directly on the shaft (7) and the valve body is divided and assembled on the butterfly.

Fig. 1

Fig. 2